# EUROPÄISCHE PATENTSCHRIFT

(11) **EP 2 849 976 B1**
(45) Veröffentlichungstag und Bekanntmachung des Hinweises auf die Patenterteilung: **02.03.2016**
(21) Anmeldenummer: 13725933.9
(22) Anmeldetag: 15.05.2013
(51) Int. Cl.: B60T 10/02, F04C 14/22

(54) **PUMPE UND DAMIT AUSGESTATTETER HYDRODYNAMISCHER RETARDER UND GETRIEBE AUSGESTATTET MIT SO EINE PUMPE**
PUMP AND A RETADER EQUIPPED WITH SUCH A PUMP, AS WELL AS A TRANSMISSION EQUIPPED WITH SUCH A PUMP
POMPE ET RALENTISSEUR AVEC UNE TELLE POMPE ET TRANSMISSION AVEC UNE TELLE POMPE

(30) Priorität: 16.05.2012 DE 102012208244
(43) Veröffentlichungstag der Anmeldung: 25.03.2015
(73) Patentinhaber: ZF Friedrichshafen AG, 88046 Friedrichshafen (DE)
(72) Erfinder: WANNINGER, Heinz, 88074 Meckenbeuren (DE)
(86) Internationale Anmeldenummer: PCT/EP2013/060006
(87) Internationale Veröffentlichungsnummer: WO 2013/171249

(56) Entgegenhaltungen:
- DE-A1-102006 061 326
- DE-A1-102008 000 901
- DE-A1-102009 026 721
- DE-A1-102010 010 799
- DE-C1- 19 532 703

## Beschreibung

Die Erfindung betrifft eine Pumpe sowie einen hydrodynamischen Retarder, der an einem Fahrzeuggetriebe vorgesehen ist. Vorzugsweise versorgt die Pumpe zumindest Lager für drehbare Teile des Retarders mit einem Schmier- und Kühlmittel. wobei Mittel vorgesehen sind, die eine unterschiedliche Schmierung und Kühlung wenigstens der Lager im Bremsbetrieb und im Nicht-Bremsbetrieb des Retarders bewirken.

Neben den Betriebsbremsen eines Fahrzeuges, die üblicherweise als einem Verschleiß unterliegende Reibungsbremsen ausgebildet sind, werden insbesondere bei Nutzfahrzeugen zusätzliche verschleißfreie Verzögerungseinrichtungen, wie Retarder eingesetzt. Zu den Retardern zählen sowohl zusätzlich am Getriebe oder am Motor angeordnete hydrodynamische, hydrostatische oder elektrodynamische Bremseinrichtungen als auch solche Systeme, die in Form eines sogenannten Intarders innerhalb des Getriebegehäuses angeordnet sind. Des Weiteren werden Retarder in Primärretarder, die in Abhängigkeit von der Motordrehzahl arbeiten, und in Sekundärretarder, die in Abhängigkeit von der Fahrzeuggeschwindigkeit arbeiten, unterschieden. Bei hydrodynamischen Retardern ist im Allgemeinen der Rotor zum Abbremsen des Fahrzeugs direkt mit einer Getriebewelle verbunden. Bei Primärretardern ist dies die Antriebswelle bzw. Getriebeeingangswelle, bei Sekundärretardern ist dies die Getriebeabtriebswelle. Der Stator des Retarders ist in der Regel gehäusefest angeordnet, und der Retarder ist üblicherweise dann nicht aktiviert, wenn ein Arbeitsraum zwischen dem Rotor und dem Stator nicht mit Flüssigkeit gefüllt ist.

Um die Abmessungen eines hydrodynamischen Retarders klein zu halten, besteht die Möglichkeit, in einer Hochtreiberstufe die Übersetzung von der Getriebewelle zum Rotor des Retarders ins Schnelle zu erhöhen. Da zwischen dem Retarder und einer den Retarder antreibenden Welle aus Kosten-, Bauraum- und Sicherheitsgründen keine Kupplung installiert ist, drehen die mechanischen Bauteile auch in seinem Nicht-Bremsbetrieb grundsätzlich mit und erzeugen entsprechende Verluste. Ein zusätzlicher Kraftstoffverbrauch des Fahrzeugs ist die Folge. Ein Teil der Gesamtverluste des Retarders wird von der Hochtreiberstufe erzeugt, welche üblicherweise als Stirnradpaar ausgebildet ist, welches die Retarderdrehzahl gegenüber der Getriebeabtriebsdrehzahl ins Schnelle übersetzt. Diese Verluste bestehen im Wesentlichen aus Pansch- und Reibungsverlusten der Zahnräder. Die Retarderwelle liegt aber häufig aus Platzgründen niedriger im Getriebegehäuse als die Getriebeabtriebswelle, so dass das auf der Retarderwelle angeordnete Zahnrad der Hochtreiberstufe ein gewisses Maß unter dem sich im Betrieb des Getriebes dynamisch ändernden Ölspiegel eintaucht. Im Bremsbetrieb ist dies wünschenswert und notwendig, weil dadurch die Verzahnungen der Hochtreiberstufe sehr gut geschmiert und gekühlt werden. Weitere Verluste entstehen in der drehbaren Lagerung der Antriebswelle des Retarders. Auch hier ist im Bremsbetrieb eine ausreichende Schmierung und Kühlung unbedingt notwendig, im Zugbetrieb des Fahrzeugs könnten die Bauteile allerdings mit deutlich weniger Öl auskommen.

Um die Schmierung und Kühlung von Bestandteilen des Retarders eines Fahrzeuggetriebes bei unterschiedlichen Betriebszuständen sicherzustellen und dabei die angesprochenen Verluste zu verringern, wird in der DE 10 2009 026 721 A1 ein Fahrzeuggetriebe mit einem hydrodynamischen Retarder vorgeschlagen, mit einer Einrichtung zum Antreiben und Steuern des Retarders, mit Lagerungen des Retarders und der Einrichtung zum Antreiben und Steuern sowie mit Mitteln zum Schmieren und Kühlen der Lagerungen und der Einrichtung zum Antreiben und Steuern. Außerdem sind Mittel vorgesehen, die eine unterschiedliche Schmierung und Kühlung der Lagerung sowie der Einrichtung zum Antreiben und Steuern mit Schmier- und Kühlmittel im Bremsbetrieb des Retarders gegenüber dem Nicht-Bremsbetrieb des Retarders ermöglichen. Diese Mittel, die eine unterschiedliche Schmierung und Kühlung ermöglichen, sind in Abhängigkeit von Betätigungssignalen des Retarders aktiv. Dazu ist ein Steuerventil vorgesehen, das auf die Betätigungssignale eines Betätigungssensors beispielsweise am Bremspedal oder an einem Bremshebel reagiert, und das den Retardersteuerdruck erzeugt, so dass das Schmier- und Kühlmittel in Abhängigkeit von dem Retardersteuerdruck abgegeben wird. In der hydraulischen Retardersteuerung ist ein Steuerdruck vorhanden, der im Nicht-Bremsbetrieb den Wert Null hat. Im Bremsbetrieb wird dieser Steuerdruck durch ein Elektromagnetventil entsprechend der Bremsmomentanforderung und des resultierenden Druckbedarfs auf Werte zwischen Null und dem maximalen Steuerdruck eingestellt. Daraus resultiert ein entsprechender Pumpendruck. Steuerdruck und Bremsmoment stehen in direktem Zusammenhang. Je höher der Steuerdruck ist, desto höher wird auch das Bremsmoment im eingeschalteten Zustand des Retarders. Durch die Anbindung der Schmier- und Kühlmittelzuführung an den Steuerdruck als lastabhängige Größe wird ein lastabhängiger Schmier- und Kühlmittelvolumenstrom erzielt. Der Schmier- und Kühlmittelvolumenstrom wird durch eine Pumpe erzeugt, die mit der Rotorwelle des Retarders gekuppelt ist und den Schmier- und Kühlmittelvolumenstrom über das Steuerventil den zu schmierenden und zu kühlenden Lagerungen führt.

Dieses in der DE 10 2009 026 721 A1 offenbarte Fahrzeuggetriebe trägt dem Sachverhalt Rechnung, dass im Bremsbetrieb des Retarders durch Betriebskräfte höhere Verlustleistungen in den Lagern und den Verzahnungen abgeführt werden müssen, und erfüllt die Forderung nach einer belastungsabhängigen Kühlschmierung im Bremsbetrieb des Retarders mit entsprechender Verlustleistungsreduktion. Im Nicht-Bremsbetrieb des Retarders beziehungsweise im unbelasteten Zustand der Lagerung ist der erforderliche Schmier- und Kühlmittelvolumenstrom zwar wesentlich geringer, jedoch muss dieser auf die maximale Retarderdrehzahl ausgelegt sein, obwohl bei niedrigen Drehzahlen weit weniger Kühlung und Schmierung erforderlich wäre. Des Weiteren ist für die Steuerung des Schmier- und Kühlmittelvolumenstroms ein Steuerventil erforderlich, dass auf die Betätigungssignale am Bremspedal oder am Bremshebel reagiert, den Retardersteuerdruck erzeugt sowie das Schmier- und Kühlmittel in Abhängigkeit des Retardersteuerdrucks abgibt.

Die Förderung des Schmier- und Kühlmittels erfolgt in der DE 10 2009 026 721 A1 mit Hilfe einer Pumpe. Beispielgebend für eine derartige Pumpe ist aus der DE 10 2006 061 326 A1 eine Pumpe mit einer Druckkammer und einem um eine Schwenkachse schwenkbar gelagerten und eine Schwenkbewegung ausführenden Steuerring bekannt geworden, der bei der Schwenkbewegung um einen Auslenkwinkel schwenkbar ist. Derartige Pumpen werden auch als Pendelschieber- oder Flügelzellenpumpe bezeichnet und finden Verwendung auch in Fahrzeuganwendungen. So sind sie beispielhaft auch als Pumpen in einem hydrodynamischen Retarder in der DE 10 2008 000 901 A1 vorgeschlagen worden.

Vor diesem Hintergrund liegt der Erfindung die Aufgabe zugrunde, eine Pumpe mit vereinfachter Steuerung vorzuschlagen sowie mit einer derartigen Pumpe die Schmier- und Kühlmittelversorgung eines damit ausgestatteten hydrodynamischen Retarders zu verbessern und die Verlustleitung eines Fahrzeuggetriebes mit einem derartigen Retarder zu minimieren.

Die Lösung dieser Aufgabe ergibt sich aus den Merkmalen des Hauptanspruchs und der Nebenansprüche. Vorteilhafte Weiterbildungen und Ausgestaltungen der Erfindung sind in den Unteransprüchen definiert.

Die Erfindung geht von der Erkenntnis aus, dass die Regelung einer Pumpe mit verschwenkbarem Steuerring, insbesondere einer Pendelschieber- oder Flügelzellenpumpe, intern mittels des schwenkbar gelagerten Steuerrings erfolgt, der so verschwenkt wird, dass die Pumpe auf Nullförderung verstellt wird und somit keine Verlustleistung durch Ableiten des Pumpenfördervolumens über ein Druckregelventil bewirkt wird.

Die erfindungsgemäße Pumpe weist eine Druckkammer und einen um eine Schwenkachse schwenkbar gelagerten und eine Schwenkbewegung ausführenden Steuerring auf, wobei der Steuerring bei der Schwenkbewegung um einen bestimmten Auslenkwinkel verschwenkt wird.

Unter einem Auslenkwinkel ist der Winkel zu verstehen, den der Steuerring bei seiner Schwenkbewegung überstreicht. Ein minimaler Auslenkwinkel wird in einer Position des Steuerrings bei maximaler Ausdehnung der Druckfeder erreicht. Ein maximaler Auslenkwinkel entspricht einer Position des Steuerrings bei größter Kompression der Druckfeder.

Diese Schwenkbewegung des Steuerrings lässt sich dazu benutzen, das mit der Pumpe geförderte Mittel entsprechend den Anforderungen einzustellen, indem der Steuerring dazu benutzt wird, eine Öffnung im Druckraum der Pumpe je nach Position und Auslenkwinkel des Steuerrings mehr oder weniger weit zu öffnen beziehungsweise ganz zu verschließen.

In einer vorteilhaften Ausgestaltung der Erfindung ist der Auslenkwinkel der Schwenkbewegung des Steuerrings abhängig von der Drehzahl der Pumpe und steht in einem charakteristischen Verhältnis zur Pumpendrehzahl. Hierdurch wird erreicht, dass in Abhängigkeit der Drehzahl und der damit einhergehenden Belastung von mit Schmier- oder Kühlmitteln zu versorgenden Bauteilen durch die entsprechende Verschwenkung des Steuerrings die Öffnung so weit geöffnet wird, dass ein entsprechend großer Schmier- und Kühlmittelvolumenstrom an die zu versorgenden Bauteile abgegeben werden kann.

Der Steuerring der Pumpe wird von einer Druckfeder mit deren Federkraft beaufschlagt und in einer vorteilhaften Ausgestaltung wird die Öffnung in der Druckkammer bei minimalem Auslenkwinkel des Steuerrings um die Schwenkachse maximal verschlossen (niedrige Drehzahl). Die Öffnung in der Druckkammer wird bei maximalem Auslenkwinkel des Steuerrings (hohe Drehzahl) gegen die Federkraft der Druckfeder maximal geöffnet.

Vorteilhafterweise kann der Steuerring mit einer Steuerkante versehen sein, welche die genannte Öffnung, abhängig von der Schwenkstellung des Steuerrings, mehr oder weniger verschließt, wobei die Öffnung vorzugsweise in einer Seitenfläche des Gehäuses oder eines Gehäusedeckels der Pumpe angeordnet sein kann.

Zur feinfühligen Steuerung des Schmier- und Kühlmittelvolumenstroms kann die Öffnung aus mehreren, in Bewegungsrichtung der Schwenkbewegung der Steuerkante des Steuerrings angeordneten Bohrungen mit gleichen und/oder mit unterschiedlichen Durchmessern bestehen, oder die Öffnung kann auch als ein länglicher, sich in Schließrichtung verengender Schlitz, beispielsweise keilförmig ausgebildet sein.

Weiter kann vorgesehen sein, dass die zumindest eine Öffnung etwa diametral gegenüber der Schwenkachse im Pumpengehäuse angeordnet ist.

Die Winkellage der Öffnung und der Steuerkante des Steuerrings bezüglich der Schwenkachse kann derart gewählt sein, dass sich vorgegebene Öffnungs- und Schließpunkte im Schenkbereich des Steuerrings ergeben, durch die sich eine Drehzahlgrenze für das Öffnen und Schließen einstellen lässt.

Die Erfindung geht weiter aus von einem hydrodynamischen Retarder und einer dem Retarder zugeordneten Pumpe, welche zumindest Lager für drehbare Teile des Retarders mit einem Schmier- und Kühlmittel versorgt, wobei Mittel vorgesehen sind, die eine unterschiedliche Schmierung und Kühlung wenigstens der Lager im Bremsbetrieb und im Nicht-Bremsbetrieb des Retarders bewirken.

Gemäß der Erfindung ist hierzu vorgesehen, dass die Pumpe mit einem um eine Schwenkachse schwenkbar gelagerten Steuerring ausgebildet ist, wobei der Steuerring auf der einen Seite mit einer Druckkammer und auf der anderen Seite mit einer Saugkammer in Verbindung steht, und wobei im Schwenkbewegungsbereich des Steuerrings eine Öffnung angeordnet ist, die über eine Schmier- und Kühlmittelleitung wenigstens mit den Lagern zum Lagern der drehbaren Teile des Retarder in Verbindung steht.

Die Erfindung geht wie gesagt von der Erkenntnis aus, dass die Regelung einer Pendelschieber- oder Flügelzellenpumpe intern mittels des schwenkbar gelagerten Steuerrings erfolgt, der so verschwenkt wird, dass die Pumpe auf Nullförderung verstellt wird und somit keine Verlustleistung durch Ableiten des Pumpenfördervolumens über ein Druckregelventil bewirkt wird. Diese Schwenkbewegung des Steuerrings lässt sich dazu benutzen, den wenigstens den Lagern des Retarders zugeführten Schmier- und Kühlmittelvolumenstrom entsprechend der mechanischen Belastung und der Drehzahl einzustellen, indem der Steuerring dazu benutzt wird, eine über eine Schmier- und Kühlmittelleitung wenigstens mit den Lagern des Retarders verbundene Öffnung zum Förderraum der Pumpe je nach Position des Steuerrings mehr oder weniger weit zu öffnen beziehungsweise zu verschließen.

Dementsprechend ist diese über die Schmier- und Kühlmittelleitung wenigstens mit den Lagern des Retarders in Verbindung stehende Öffnung bei maximaler Auslenkung des Steuerrings zumindest überwiegend oder ganz geschlossen, welches insbesondere bei niedrigen Drehzahlen und geringer Belastung der Fall ist, wenn kein großer Bedarf an einem großen Schmier- und Kühlmittelvolumenstrom besteht, dass aber bei minimaler Auslenkung des Steuerrings, also in der Regel bei hoher Drehzahl und großer Belastung, die über die Schmier- und Kühlmittelleitung mit wenigstens den Lagern des Retarders verbundene Öffnung vollständig geöffnet ist und dadurch einen großen Schmier- und Kühlmittelvolumenstrom zu den Lagern freigibt.

Zum Einstellen einer Durchflusscharakteristik für den Schmier- und Kühlmittelvolumenstrom zu den Lagern hin, kann vorteilhafterweise im Bereich zwischen der Öffnung und den Lagern eine Ausflussblende angeordnet sein.

Die Erfindung geht schließlich auch aus von einem Fahrzeuggetriebe mit einem hydrodynamischen Retarder und einer dem Retarder zugeordneten Pumpe, welche zumindest Lager für drehbare Teile des Retarders mit einem Schmier- und Kühlmittel versorgt. Die Pumpe weist einen um eine Schwenkachse schwenkbar gelagerten und eine Schwenkbewegung ausführenden Steuerring auf, wobei der Steuerring auf der einen Seite mit einer Druckkammer und auf der anderen Seite mit einer Saugkammer in Verbindung steht und bei der Schwenkbewegung eine Öffnung in der Druckkammer der Pumpe unterschiedlich weit öffnet oder verschließt, um eine unterschiedliche Schmierung und Kühlung wenigstens der Lager im Bremsbetrieb und im Nicht-Bremsbetrieb des Retarders zu bewirken.

Die Erfindung wird nachstehend anhand eines in der Zeichnung dargestellten Ausführungsbeispiels weiter erläutert. In der Zeichnung zeigt
- Fig. 1: eine schematische Ansicht eines Teils eines Fahrzeuggetriebes mit einem hydrodynamischen Retarder und einer zugeordneten Pumpe für ein Schmier- und Kühlmittel,
- Fig. 2: eine schematische Schnittansicht durch eine Pendelschieberpumpe gemäß der Erfindung in einer ersten Förderstellung,
- Fig. 3: eine schematische Schnittansicht durch die Pendelschieberpumpe gemäß Fig. 2 in einer zweiten Förderstellung,
- Fig. 4: eine schematische Ansicht einer über eine Schmier- und Kühlmittelleitung mit den Lagern verbundene Öffnung in der Pendelschieberpumpe gemäß Fig. 1 in einer zweiten Ausführungsform, und
- Fig. 5: eine schematische Ansicht einer über eine Schmier- und Kühlmittelleitung mit den Lagern verbundene Öffnung in der Pendelschieberpumpe gemäß Fig. 1 in einer dritten Ausführungsform.

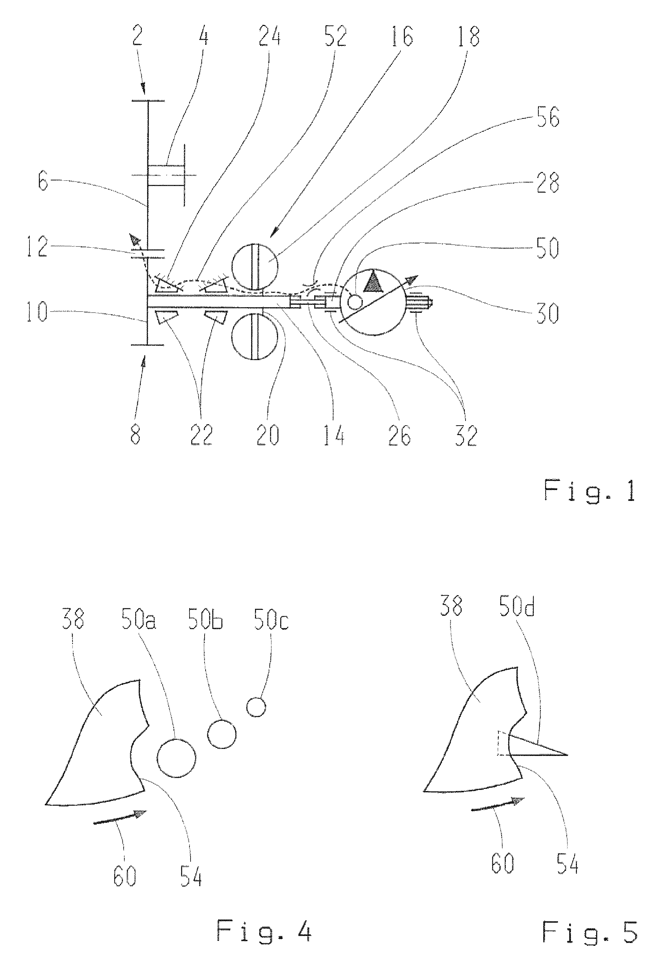

In Fig.1 ist schematisch eine Getriebeabtriebswelle 4 eines Fahrzeuggetriebes 2 gezeigt, an der ein erstes Zahnrad 6 einer Hochtreiberstufe 8 befestigt ist. Ein zweites Zahnrad 10 der Hochtreiberstufe 8 kämmt mit dem ersten Zahnrad 6 über eine Verzahnung 12. Das zweite Zahnrad 10 ist mit einer Rotorwelle 14 eines Retarders 16 drehfest verbunden, dessen Rotor 18 mit der Rotorwelle 14 mit Hilfe einer Mitnahmeverzahnung 20 drehfest gekoppelt ist. Die Rotorwelle 14 ist mittels zwei Lager 22 in einem Gehäuse 24 drehbar gelagert. Über eine Pumpenkupplung 26 ist eine Pumpenwelle 28 einer Pumpe 30 mit der Rotorwelle 14 verbunden. Die Pumpenwelle 28 ist mittels zwei Lager 32 im Gehäuse 24 drehbar gelagert.

Bei der Pumpe 30 handelt es sich um eine geregelte Pendelschieber- oder Flügelzellenpumpe, deren grundsätzlicher Aufbau aus der DE 10 2010 010 799 A1 bekannt ist. Die Funktionsweise einer Pendelschieberpumpe ist in der DE 195 32 703 C1 im Einzelnen beschrieben, insbesondere hinsichtlich deren Regelung. Der Inhalt dieser beiden Druckschriften ist hier vollständig zum Gegenstand der Offenbarung gemacht.

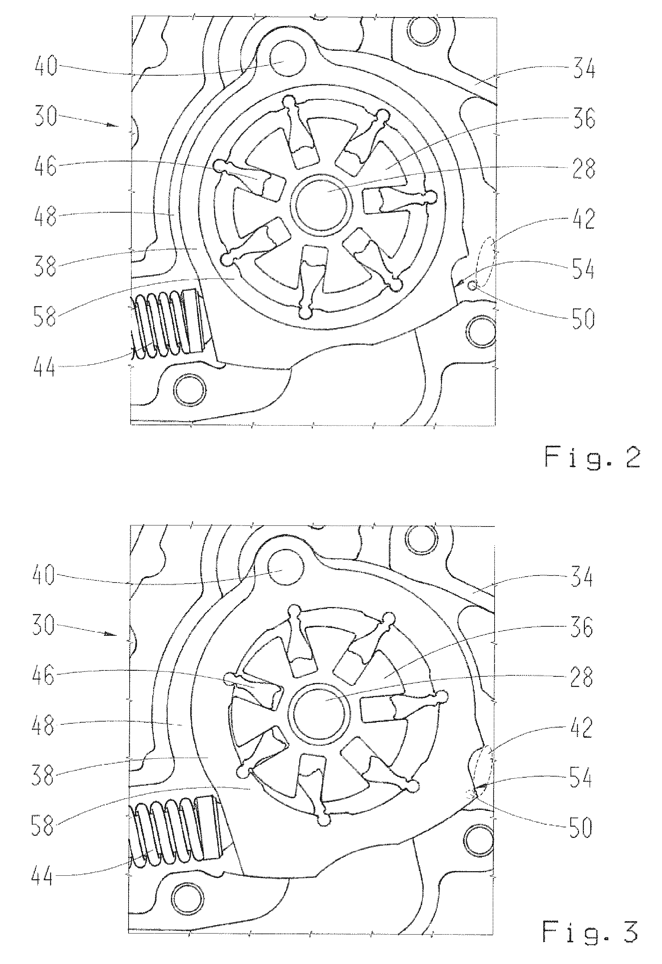

Fig. 2 zeigt die Pendelschieberpumpe 30 gemäß Fig. 1, die in einem Pumpengehäuse 34 einen um eine Schwenkachse 40 schwenkbar gelagerten Steuerring 38 aufweist. Dieser Steuerring 38 ist im Pumpengehäuse 34 derart abgedichtet gelagert, dass er vom Druck in einer Druckkammer 42 beaufschlagbar ist und dadurch gegen die Kraft einer Feder 44, die in einer Saugkammer 48 angeordnet ist, schwenkbar ist. Innerhalb des Steuerrings 38 ist in bekannter Weise ein Rotor 36 mittels der Pumpenwelle 28 drehbar angetrieben. Die Pumpenwelle 28 ist im Pumpengehäuse 34 mittels der in Fig. 1 gezeigten Lager 32 drehbar gelagert.

Im Steuerring 38 ist ein Außenrotor 58 drehbar gelagert, der mit dem Rotor 36 über in den Außenrotor 58 eingelagerte Pendelmitnehmer 46 drehfest verbunden ist. Durch Schwenken des Steuerrings 38 um die Schwenkachse 40 lässt sich die Pumpe 30 zwischen einer in Fig. 2 dargestellten Stellung mit minimalem Fördervolumenstrom und einer in Fig. 3 dargestellten Stellung mit maximalem Fördervolumenstrom regeln. Dies geschieht selbsttätig dadurch, dass sich in der Druckkammer 42 beim Betrieb der Pumpe 30 ein Druck aufbaut, der in der Regel der Pumpendruck ist. Erfolgt ein Druckanstieg hin zum Pumpensolldruck, dann bewirkt der Druck in der Druckkammer 42 ein Verschwenken des Steuerrings 38 gegen den Druck der Feder 44.

In der in Fig. 2 dargestellten Betätigungsstellung weisen der Steuerring 38 und der darin angeordnete Außenrotor 58 nur eine geringe Exzentrizität gegenüber dem Rotor 36 auf, wodurch die Pumpe 30 in ihre minimale Förderfähigkeit eingestellt ist. In dieser Stellung gibt eine Steuerkante 54 radial außen am Steuerring 38 eine Öffnung 50 im Pumpengehäuse 34 frei, die über eine Schmier- und Kühlmittelleitung 52 (Fig. 1) wenigstens mit den Lagern 22 der Rotorwelle 14 des Retarders 16 verbunden ist. Vorzugsweise werden auch die Lager 32 der Pumpenwelle 28 sowie die Verzahnung 12 der Hochtreiberstufe 8 über diese Schmier- und Kühlmittelleitung 52 mit dem Schmier- und Kühlmittel versorgt. In der in Fig. 2 gezeigten Betätigungsstellung der Pumpe 30 wird der größtmögliche Schmier- und Kühlmittelvolumenstrom den Lagern 22 und 32 sowie der Hochtreiberstufe 8 zugeführt. Diese Stellung entspricht in der Regel dem Nicht-Bremsbetrieb des Retarders 16 bei hohen Drehzahlen der Getriebeabtriebswelle 4, bei dem eine reichliche Versorgung mit Schmier- und Kühlmittel der Hochtreiberstufe 8 sowie der Lager 22 und 32 erforderlich ist.

Fig. 3 zeigt eine Stellung des Steuerrings 38, in der die Pumpe 30 in ihre maximale Förderstellung eingestellt ist. In dieser Stellung ist die Öffnung 50 im Pumpengehäuse 34 zumindest überwiegend oder ganz geschlossen, so dass nur ein geringer Schmier- und Kühlmittelvolumenstrom zur Hochtreiberstufe 8 sowie zu den Lagern 22 und 32 gelangt. Diese Betriebsstellung der Pumpe 30 entspricht in der Regel einer geringen Drehzahl der Getriebeabtriebswelle 4 und dem Nicht-Bremsbetrieb des Retarders 16 mit geringen Anforderungen an die Größe des Schmier- und Kühlmittelvolumenstroms. Zwischenstellungen des Steuerrings 38 führen zu einer teilweisen Freigabe der Öffnung 50 im Pumpengehäuse 34 durch die Steuerkante 54 des Steuerrings 38 und einer entsprechenden Einstellung der Größe des Schmier- und Kühlmittelvolumenstroms.

Die Öffnung 50 im Pumpengehäuse 34 kann gemäß Fig. 4 in mehrere, zueinander beabstandete Bohrungen 50a, 50b, 50c in Schwenkrichtung 60 des Steuerrings 38 unterteilt sein, die unterschiedliche Durchmesser aufweisen, wodurch sich der Schmier- und Kühlmittelvolumenstrom, abhängig von der Schwenkposition des Steuerrings 38 mittels seiner Steuerkante 54 stufenweise steuern lässt.

Eine kontinuierliche Steuerung des Schmier- und Kühlmittelvolumenstroms lässt sich mit einer Öffnung 50d gemäß Fig. 5 erreichen, sofern diese Öffnung 50d als Schlitz mit einem sich verengendem Querschnitt, also beispielsweise keilförmig ausgebildet ist.

Die Winkellage der Öffnung 50, der Bohrungen 50a, 50b, 50c bzw. des Schlitzes 50d und der Steuerkante 54 des Steuerrings 38 sind bezüglich der Schwenkachse 40 so wählbar, dass sich vorgegebene Öffnungs- und Schließpunkte ergeben, die von den in den Figuren 2 und 3 dargestellten Maximalstellungen abweichen können, wodurch sich untere und obere Drehzahlgrenzen einstellen lassen.

In der Schmier- und Kühlmittelleitung 52 kann mindestens eine Ausflussblende 56 angeordnet sein, welche die Einstellungen einer Durchflusscharakteristik zu den Lagern 22 und/oder 32 sowie zu der Verzahnung 12 ermöglicht (Fig. 1). Die Öffnung 50, die Bohrungen 50a, 50b, 50c oder der Schlitz 50d können, wie in Figuren 2 und 3 dargestellt ist, in einer Seitenfläche des Pumpengehäuses 34 oder eines Gehäusedeckels der Pumpe 30 angeordnet sein. Ebenso ist es wie gezeigt möglich, die Öffnung 50, die Bohrungen 50a, 50b, 50c oder den Schlitz 50d in einer zu der Schwenkachse 40 etwa diametral gegenüber liegenden Dichtfläche des Pumpengehäuses 34 anzuordnen.

Durch die Druckbeaufschlagung des Steuerrings 38 auf der Seite der Druckkammer 42 gegen die Kraftwirkung der Feder 44 wird ein konstanter Pumpendruck erzeugt. Durch die Verstellbeweglichkeit des Steuerrings 38 lässt sich der Pumpendruck über den gesamten Drehzahlbereich konstant halten. Der Verstellweg bzw. der Auslenkwinkel des Steuerrings 38 steht demnach in einem charakteristischen Verhältnis zur Drehzahl, weshalb mit steigender Drehzahl der Auslenkwinkel des Steuerrings 38 größer und damit der Schmier- und Kühlmittelvolumenstrom größer wird. Der Steuerring 38 kann somit als drehzahlabhängig arbeitende Kulisse angesehen werden. Über die Öffnung 50 bzw. die Bohrungen 50a, 50b, 50c oder den Schlitz 50d lässt sich über den Verstellbereich des Steuerrings 38 Schmier- und Kühlmittel abzweigen und den Lagern 22 und 32 sowie der Verzahnung 12 zuführen. Dabei werden diese Öffnung 50, die Bohrungen 50a, 50b, 50c bzw. der Schlitz 50d bei niedrigen Drehzahlen und geringem Schmier- und Kühlmittelbedarf überwiegend oder ganz geschlossen. Bei Höchstdrehzahl ergibt sich der größte Ausflussquerschnitt und damit der größtmögliche Schmier- und Kühlmittelvolumenstrom.

### Bezugzeichenliste

- 2: Fahrzeuggetriebe
- 4: Getriebeabtriebswelle
- 6: Erstes Zahnrad
- 8: Hochtreiberstufe
- 10: Zweites Zahnrad
- 12: Verzahnung
- 14: Rotorwelle
- 16: Retarder
- 18: Rotor
- 20: Mitnahmeverzahnung
- 22: Lager für die Rotorwelle
- 24: Gehäuse
- 26: Pumpenkupplung
- 28: Pumpenwelle
- 30: Pumpe
- 32: Lager für die Pumpenwelle
- 34: Pumpengehäuse
- 36: Rotor
- 38: Steuerring
- 40: Schwenkachse
- 42: Druckkammer
- 44: Feder
- 46: Pendelmitnehmer
- 48: Saugkammer
- 50: Öffnung
- 50a: Bohrung
- 50b: Bohrung
- 50c: Bohrung
- 50d: Schlitz
- 52: Schmier- und Kühlmittelleitung
- 54: Steuerkante
- 56: Ausflussblende
- 58: Außenrotor
- 60: Schwenkrichtung des Steuerrings

## Patentansprüche

1. Pumpe (30) mit einer Druckkammer (42) und einem um eine Schwenkachse (40) schwenkbar gelagerten und eine Schwenkbewegung ausführenden Steuerring (38), der bei der Schwenkbewegung um einen Auslenkwinkel schwenkbar ist, **dadurch gekennzeichnet, dass** in der Druckkammer (42) der Pumpe (30) eine Öffnung (50, 50a, 50b, 50c, 50d) vorgesehen ist, die der Steuerring (38) bei der Schwenkbewegung unterschiedlich weit öffnet oder verschließt.

2. Pumpe (30) nach Anspruch 1, **dadurch gekennzeichnet, dass** der Auslenkwinkel der Schwenkbewegung des Steuerrings (38) abhängig von der Drehzahl der Pumpe (30) ist.

3. Pumpe (30) nach Anspruch 1 oder 2, **dadurch gekennzeichnet, dass** der Steuerring (38) von einer Druckfeder (44) mit deren Federkraft beaufschlagt ist und die Öffnung (50, 50a, 50b, 50c, 50d) bei minimaler Auslenkung des Steuerrings (38) um die Schwenkachse (40) zumindest überwiegend oder ganz geschlossen und bei maximaler Auslenkung des Steuerrings (38) gegen die Federkraft der Druckfeder maximal geöffnet ist.

4. Pumpe (30) nach einem der Ansprüche 1 bis 3, **dadurch gekennzeichnet, dass** der Steuerring (38) mit einer Steuerkante (54) versehen ist, welche die Öffnung (50, 50a, 50b, 50c, 50d) abhängig von der Schwenkstellung des Steuerrings (38) mehr oder weniger verschließt.

5. Pumpe (30) nach einem der Ansprüche 1 bis 4, **dadurch gekennzeichnet, dass** die Öffnung (50, 50a, 50b, 50c, 50d) in einer Seitenfläche eines Pumpengehäuses (34) oder eines Gehäusedeckels der Pumpe (30) angeordnet ist.

6. Pumpe (30) nach einem der Ansprüche 1 bis 5, **dadurch gekennzeichnet, dass** die Öffnung aus mehreren in Bewegungsrichtung der Schwenkbewegung des Steuerrings (38) angeordneten Bohrungen (50a, 50b, 50c) mit gleichem oder unterschiedlichen Durchmessern besteht.

7. Pumpe (30) nach einem der Ansprüche 1 bis 5, **dadurch gekennzeichnet, dass** die Öffnung als ein länglicher, sich in Schließrichtung verengender Schlitz (50d) ausgebildet ist.

8. Pumpe (30) nach einem der Ansprüche 1 bis 7, **dadurch gekennzeichnet, dass** die Öffnung (50, 50a, 50b, 50c, 50d) etwa diametral gegenüber der Schwenkachse (40) im Gehäuse (34) angeordnet ist.

9. Pumpe (30) nach einem der Ansprüche 1 bis 8, **dadurch gekennzeichnet, dass** die Winkellage der Öffnung (50, 50a, 50b, 50c, 50d) und des Steuerrings (38) bezüglich der Schwenkachse (40) derart gewählt sind, dass sich vorgegebene Öffnungs- und Schließpunkte im Schenkbereich des Steuerrings (38) ergeben.

10. Hydrodynamischer Retarder (16) mit einer dem Retarder (16) zugeordneten Pumpe (30), die zumindest Lager (22) für drehbare Teile des Retarders (16) mit einem Schmier- und Kühlmittel versorgt, wobei Mittel (50, 50a, 50b, 50c, 50d) vorgesehen sind, die eine unterschiedliche Schmierung und Kühlung wenigstens der Lager (22) im Bremsbetrieb und im Nicht-Bremsbetrieb des Retarders (16) bewirken, **dadurch gekennzeichnet, dass** die Pumpe (30) mit einer Druckkammer (42) und einem um eine Schwenkachse (40) schwenkbar gelagerten und eine Schwenkbewegung ausführenden Steuerring (38) ausgebildet ist, wobei der Steuerring (38) bei der Schwenkbewegung eine Öffnung (50, 50a, 50b, 50c, 50d) in der Druckkammer (42) der Pumpe (30), die über eine Schmier- und Kühlmittelleitung (52) wenigstens mit den Lagern (22) für drehbare Teile des Retarder (16) in Verbindung steht, unterschiedlich weit öffnet oder verschließt, um die unterschiedliche Schmierung und Kühlung wenigstens der Lager (22) im Bremsbetrieb und im Nicht-Bremsbetrieb des Retarders (16) zu bewirken.

11. Hydrodynamischer Retarder (16) nach Anspruch 10, **dadurch gekennzeichnet, dass** im Strömungsweg für das Schmier- und Kühlmittel zwischen der Öffnung (50, 50a, 50b, 50c, 50d) und den Lagern (22) für eine Rotorwelle (14) und/oder den Lagern (32) für eine Retarderwelle (28) eine Ausflussblende (56) zum Einstellen einer Durchflusscharakteristik angeordnet ist.

12. Fahrzeuggetriebe (2) mit einem hydrodynamischen Retarder (16), **dadurch gekennzeichnet, dass** eine dem Retarder (16) zugeordnete Pumpe (30), welche zumindest Lager (22) für drehbare Teile des Retarders (16) mit einem Schmier- und Kühlmittel versorgt, mit einer Druckkammer (42) und einem um eine Schwenkachse (40) schwenkbar gelagerten und eine Schwenkbewegung ausführenden Steuerring (38) ausgebildet ist, der bei der Schwenkbewegung eine Öffnung (50, 50a, 50b, 50c, 50d) in der Druckkammer (42) der Pumpe (30) unterschiedlich weit öffnet oder verschließt, um eine unterschiedliche Schmierung und Kühlung wenigstens der Lager (22) im Bremsbetrieb und im Nicht-Bremsbetrieb des Retarders (16) zu bewirken.

## Claims

1. Pump (30) having a pressure chamber (42) and a control ring (38) which is mounted pivotably about a pivot axis (40), performs a pivoting movement, and can be pivoted by a deflection angle during the pivoting movement, **characterized in that** an opening (50, 50a, 50b, 50c, 50d) which the control ring (38) opens or closes to a different extent during the pivoting movement is provided in the pressure chamber (42) of the pump (30).

2. Pump (30) according to Claim 1, **characterized in that** the deflection angle of the pivoting movement of the control ring (38) is dependent on the rotational speed of the pump (30).

3. Pump (30) according to Claim 1 or 2, **characterized in that** the control ring (38) is loaded by a compression spring (44) with the spring force of the latter, and the opening (50, 50a, 50b, 50c, 50d) is closed at least predominantly or completely in the case of a minimal deflection of the control ring (38) about the pivot axis (40) and is open to a maximum in the case of a maximum deflection of the control ring (38) counter to the spring force of the compression spring.

4. Pump (30) according to one of Claims 1 to 3, **characterized in that** the control ring (38) is provided with a control edge (54) which closes the opening (50, 50a, 50b, 50c, 50d) to a greater or lesser extent depending on the pivoting position of the control ring (38).

5. Pump (30) according to one of Claims 1 to 4, **characterized in that** the opening (50, 50a, 50b, 50c, 50d) is arranged in a side face of a pump housing (34) or a housing cover of the pump (30).

6. Pump (30) according to one of Claims 1 to 5, **characterized in that** the opening consists of a plurality of bores (50a, 50b, 50c) with identical or different diameters which are arranged in the movement direction of the pivoting movement of the control ring (38).

7. Pump (30) according to one of Claims 1 to 5, **characterized in that** the opening is configured as an elongate slot (50d) which narrows in the closing direction.

8. Pump (30) according to one of Claims 1 to 7, **characterized in that** the opening (50, 50a, 50b, 50c, 50d) is arranged in the housing (34) approximately diametrically with respect to the pivot axis (40).

9. Pump (30) according to one of Claims 1 to 8, **characterized in that** the angular positions of the opening (50, 50a, 50b, 50c, 50d) and the control ring (38) are selected with regard to the pivot axis (40) in such a way that predefined opening and closing points result in the pivoting range of the control ring (38).

10. Hydrodynamic retarder (16) having a pump (30) which is assigned to the retarder (16) which supplies at least bearings (22) for rotatable parts of the retarder (16) with a lubricant and coolant, means (50, 50a, 50b, 50c, 50d) being provided which bring about different lubrication and cooling at least of the bearings (22) during braking operation and during non-braking operation of the retarder (16), **characterized in that** the pump (30) is configured with a pressure chamber (42) and a control ring (38) which is mounted pivotably about a pivot axis (40) and performs a pivoting movement, the control ring (38) opening or closing an opening (50, 50a, 50b, 50c, 50d) in the pressure chamber (42) of the pump (30) to a different extent during the pivoting movement, which opening (50, 50a, 50b, 50c, 50d) is connected via a lubricant and coolant line (52) at least to the bearings (22) for rotatable parts of the retarder (16), in order to bring about the different lubricant and cooling at least of the bearings (22) during braking operation and during non-braking operation of the retarder (16).

11. Hydrodynamic retarder (16) according to Claim 10, **characterized in that** an outflow diaphragm (56) for setting a throughflow characteristic is arranged in the flow path for the lubricant and coolant between the opening (50, 50a, 50b, 50c, 50d) and the bearings (22) for a rotor shaft (14) and/or the bearings (32) for a retarder shaft (28).

12. Vehicle transmission (2) having a hydrodynamic retarder (16), **characterized in that** a pump (30) which is assigned to the retarder (16) and supplies at least bearings (22) for rotatable parts of the retarder (16) with a lubricant and coolant is configured with a pressure chamber (42) and a control ring (38) which is mounted pivotably about a pivot axis (40), performs a pivoting movement, and opens or closes an opening (50, 50a, 50b, 50c, 50d) in the pressure chamber (42) of the pump (30) to a different extent during the pivoting movement, in order to bring about different lubrication and cooling at least of the bearings (22) during braking operation and during non-braking operation of the retarder (16).

## Revendications

1. Pompe (30) avec une chambre de compression (42) et avec un anneau de commande (38) monté de façon pivotante autour d'un axe de pivotement (40) et effectuant un mouvement de pivotement, qui peut pivoter d'un angle de pivotement lors d'un mouvement de pivotement, **caractérisée en ce qu'**il est prévu dans la chambre de compression (42) de la pompe (30) une ouverture (50, 50a, 50b, 50c, 50d), que l'anneau de commande (38) ouvre ou ferme de façon différemment large lors du mouvement de pivotement.

2. Pompe (30) selon la revendication 1, **caractérisée en ce que** l'angle de pivotement du mouvement de pivotement de l'anneau de commande (38) dépend de la vitesse de rotation de la pompe (30).

3. Pompe (30) selon la revendication 1 ou 2, **caractérisée en ce que** l'anneau de commande (38) est soumis à une force élastique par un ressort de pression (44) et l'ouverture (50, 50a, 50b, 50c, 50d) est au moins principalement ou entièrement fermée pour une déviation minimale de l'anneau de commande (38) autour de l'axe de pivotement (40) et est ouverte au maximum pour une déviation maximale de l'anneau de commande (38) contre la force élastique du ressort de pression.

4. Pompe (30) selon l'une quelconque des revendications 1 à 3, **caractérisée en ce que** l'anneau de commande (38) est doté d'un bord de commande (54), qui ferme plus ou moins l'ouverture (50, 50a, 50b, 50c, 50d) en fonction de la position de pivotement de l'anneau de commande (38).

5. Pompe (30) selon l'une quelconque des revendications 1 à 4, **caractérisée en ce que** l'ouverture (50, 50a, 50b, 50c, 50d) est disposée dans une face latérale d'un corps de pompe (34) ou d'un couvercle de corps de la pompe (30).

6. Pompe (30) selon l'une quelconque des revendications 1 à 5, **caractérisée en ce que** l'ouverture se compose de plusieurs trous forés (50a, 50b, 50c) de diamètres identiques ou différents, disposés dans la direction de mouvement du mouvement de pivotement de l'anneau de commande (38).

7. Pompe (30) selon l'une quelconque des revendications 1 à 5, **caractérisée en ce que** l'ouverture se présente sous la forme d'une fente allongée (50d), se rétrécissant dans la direction de fermeture.

8. Pompe (30) selon l'une quelconque des revendications 1 à 7, **caractérisée en ce que** l'ouverture (50, 50a, 50b, 50c, 50d) est disposée en position sensiblement diamétrale par rapport à l'axe de pivotement (40) dans le corps (34).

9. Pompe (30) selon l'une quelconque des revendications 1 à 8, **caractérisée en ce que** les positions angulaires de l'ouverture (50, 50a, 50b, 50c, 50d) et de l'anneau de commande (38) par rapport à l'axe de pivotement (40) sont choisies de telle manière qu'il en résulte des points d'ouverture et de fermeture prédéterminés dans la plage de pivotement de l'anneau de commande (38).

10. Ralentisseur hydrodynamique (16) avec une pompe (30) associée au ralentisseur (16), qui alimente au moins des paliers (22) pour des parties tournantes du ralentisseur (16) avec un agent de lubrification et de refroidissement, dans lequel il est prévu des moyens (50, 50a, 50b, 50c, 50d) qui provoquent une lubrification et un refroidissement différents au moins des paliers (22) en fonctionnement de freinage et en fonctionnement de non-freinage du ralentisseur (16), **caractérisé en ce que** la pompe (30) est configurée avec une chambre de compression (42) et un anneau de commande (38) monté de façon pivotante autour d'un axe de pivotement (40) et effectuant un mouvement de pivotement, dans lequel l'anneau de commande (38) ouvre ou ferme de façon différemment large une ouverture (50, 50a, 50b, 50c, 50d) dans la chambre de compression (42) de la pompe (30), qui est en communication par une conduite d'agent de lubrification et de refroidissement (52) au moins avec les paliers (22) pour des parties tournantes du ralentisseur (16), afin de provoquer une lubrification et un refroidissement différents au moins des paliers (22) en fonctionnement de freinage et en fonctionnement de non-freinage du ralentisseur (16).

11. Ralentisseur hydrodynamique (16) selon la revendication 10, **caractérisé en ce qu'**un diaphragme de sortie (56), permettant le réglage d'une caractéristique d'écoulement, est disposé dans le chemin d'écoulement pour l'agent de lubrification et de refroidissement entre l'ouverture (50, 50a, 50b, 50c, 50d) et les paliers (22) pour un arbre de rotor (14) et/ou les paliers (32) pour un arbre de ralentisseur (28).

12. Boîte de vitesses de véhicule (2) avec un ralentisseur hydrodynamique (16), **caractérisée en ce qu'**une pompe (30) associée au ralentisseur (16), qui alimente au moins des paliers (22) pour des parties tournantes du ralentisseur (16) avec un agent de lubrification et de refroidissement, est configurée avec une chambre de compression (42) et avec un anneau de commande (38) monté de façon pivotante autour d'un axe de pivotement (40) et effectuant un mouvement de pivotement, qui ouvre et ferme de façon différemment large une ouverture (50, 50a, 50b, 50c, 50d) dans la chambre de compression (42) de la pompe (30) lors d'un mouvement de pivotement, afin de provoquer une lubrification et un refroidissement différents au moins des paliers (22) en fonctionnement de freinage et en fonctionnement de non-freinage du ralentisseur (16).
